# EUROPÄISCHE PATENTANMELDUNG

(11) **EP 4 852 248 A1**
(43) Veröffentlichungstag der Anmeldung: **09.12.2026**
(21) Anmeldenummer: 26182503.8
(22) Anmeldetag: 02.06.2026
(51) Int. Cl.: H02G 3/18, H02G 3/12

(54) **TISCH- ODER GERÄTEPLATTENANSCHLUSSFELD**

(30) Priorität: 03.06.2025 DE 102025121595
(71) Anmelder: Schulte-Elektrotechnik GmbH & Co. KG, 58515 Lüdenscheid (DE)
(72) Erfinder: Menges, Jürgen, 58553 Halver (DE); Rittinghaus, Hendrik, 58579 Schalksmühle (DE); Schulte, Siegfried, 58515 Lüdenscheid (DE)
(74) Vertreter: Patentanwälte Dörner & Kötter PartG mbB

(57) **Zusammenfassung**

Die Erfindung betrifft ein Tisch- oder Geräteplattenanschlussfeld für Netzspannungsanschlüsse und/oder Informationsanschlüsse, mit einem Einbaurahmen (1), in dem ein Steckdoseneinsatz (2) angeordnet ist und mit einem Abdeckrahmen (3) versehen ist, wobei der Steckdoseneinsatz (2) einen Anschlussbereich (21) mit Steckplätzen aufweist, der um seine Längsachse drehbar ist. Das Anschlussfeld ist aus zwei Baugruppen gebildet.

## Beschreibung

Die Erfindung betrifft ein Tisch- oder Geräteplattenanschlussfeld für Netzspannungsanschlüsse und/oder Informationsanschlüsse, nach dem Oberbegriff des Patentanspruchs 1.

Tisch- oder Geräteplattenanschlussfelder sind in vielfältiger Weise bekannt. Sie stellen die Netzspannung und/oder die Informationsversorgung für bewegliche Datengeräte und andere Stromverbraucher bereit. Die bekannten Vorrichtungen sind in einer Tisch- oder Geräteplatte oder einem Fußboden angeordnet. Zum Anschluss der Verbraucher sind die Anschlussfelder aufklappbar. Beim Aufklappen werden die Netzspannungs- und Informationsanschlüsse aus der Platte bzw. dem Fußboden freigelegt und sind somit sichtbar. Die Anschlüsse können in dieser Position zum Einstecken der Stecker der Datengeräte und/oder Stromverbraucher genutzt werden.

Tisch- oder Geräteplattenanschlussfelder benötigen in der Tisch- oder Geräteplatte bzw. dem Fußboden eine sichere Befestigung, um einen zuverlässigen Anschluss an die elektrische Gebäudeinstallation sowie Datenkabel zu ermöglichen. Gleichzeitig muss gewährleistet sein, dass beim Einstecken von Steckern elektrischer Verbraucher oder Datenverarbeitungsgeräten die Tisch- oder Geräteplattenanschlussfelder spielfrei in den Platten bzw. dem Fußboden angeordnet sind. Hierzu finden Befestigungsvorrichtungen in Form von Schraubverbindungen Anwendung. Beispielsweise sind Lösungen bekannt, bei denen gelochte Laschen nach dem Einsetzen der Anschlussfelder in die jeweilige Tisch- oder Geräteplatte bzw. den Fußboden auf der Unterseite der Platte bzw. des Bodens umgebogen werden und durch die Lochung eine Schraube in die Platte bzw. in den Fußboden eingebracht wird. Zwar ist diese Art der Befestigung zuverlässig und erfüllt somit ihren Zweck; sie weist jedoch den Nachteil auf, dass ihre Installation aufwändig ist. Insbesondere die Tatsache, dass die Befestigung auf der Unterseite der jeweiligen Platte bzw. des Fußbodens stattfindet, macht die Montage umständlich.

Zur Vermeidung dieses Nachteils ist aus der DE 10 20214 102 961 B3 ein Tisch- oder Geräteplattenanschlussfeld bekannt, bei dem die Befestigung an der Platte bzw. dem Fußboden mit Hilfe einer Klemmeinrichtung erfolgt. Hierzu ist ein Verspannungselement vorgesehen, welches mit Rippen am Gehäuse des Tisch- oder Geräteplattenanschlussfeldes korrespondiert.

Das bekannte Tisch- oder Geräteplattenanschlussfeld erfüllt die gestellten Anforderungen. Allerdings hat sich der vielteilige und aufwändige Aufbau in der Produktion und Anwendung als nachteilig herausgestellt. Insbesondere sind durch die vielteilige Gestaltung und die Zusammenfassung aller Teile in einem Gehäuse die Herstellkosten erhöht.

Hier will die Erfindung Abhilfe schaffen. Der Erfindung liegt die Aufgabe zugrunde, ein Tisch- oder Geräteplattenanschlussfeld für Netzspannungsanschlüsse und/oder Informationsanschlüsse zu schaffen, das einfach aufgebaut ist. Gemäß der Erfindung wird diese Aufgabe mit den Merkmalen des Patentanspruchs 1 gelöst.

Mit der Erfindung ist ein Tisch- oder Geräteplattenanschlussfeld für Netzspannungsanschlüsse und/oder Informationsanschlüsse geschaffen, welches einfach aufgebaut ist. Dies ist durch die lediglich zwei Baugruppen, aus denen das Anschlussfeld zusammengesetzt ist, hervorgerufen. Dadurch sind die Kosten bei der Herstellung und Montage gesenkt.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:
- Figur 1: die perspektivische Darstellung eines Tisch- oder Geräteplattenanschlussfeldes in geschlossenem Zustand;
- Figur 2: die Draufsicht auf das in Figur 1 dargestellte Tisch- oder Geräteplattenanschlussfeld in halb geöffnetem Zustand in verkleinertem Maßstab;
- Figur 3: den Schnitt entlang der Linie A-A in Figur 2;
- Figur 4: die Einzelheit "B" aus Figur 3 in vergrößertem Maßstab;
- Figur 5: die Einzelheit "C" aus Figur 3 in vergrößertem Maßstab;

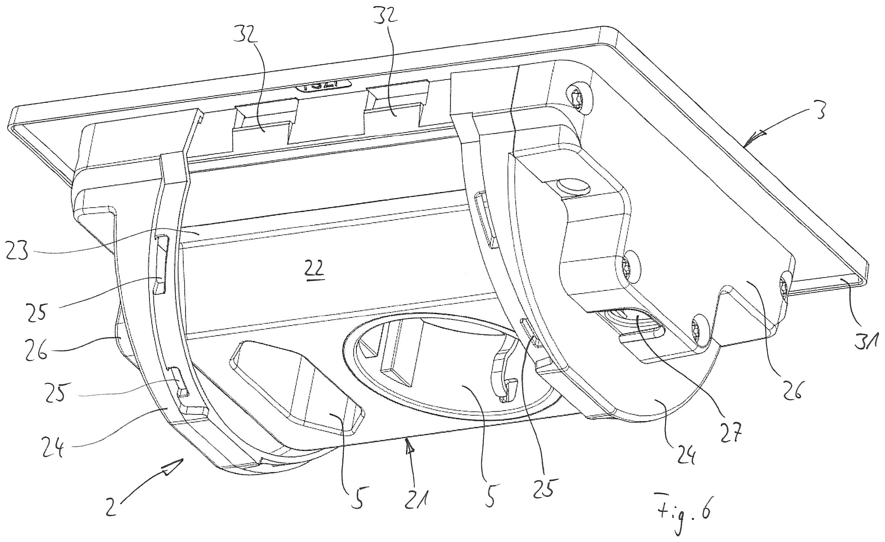

- Figur 6: die perspektivische Darstellung von unten eines Steckdoseneinsatzes mit Abdeckrahmen;

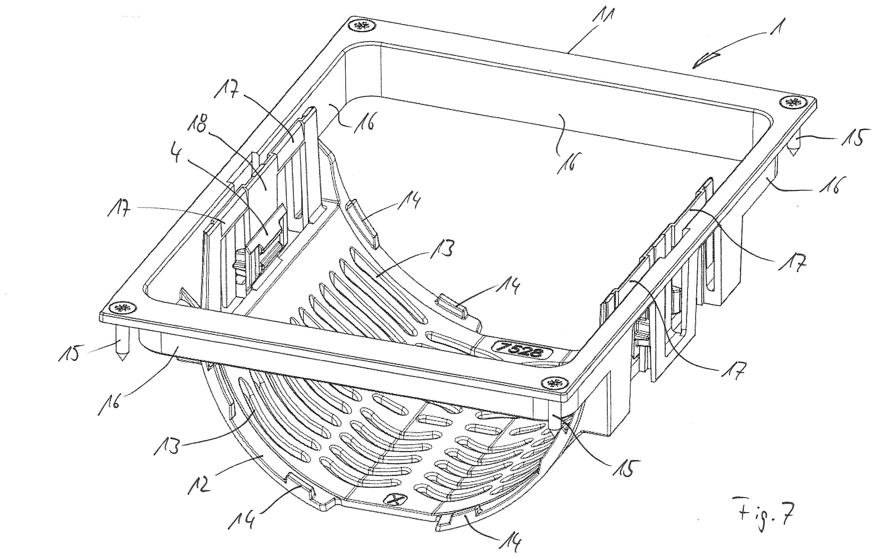

- Figur 7: die perspektivische Darstellung eines Einbaurahmens;
- Figur 8: die perspektivische Darstellung des in Figur 1 dargestellten Tisch- oder Geräteplattenanschlussfeldes in Betriebsposition.

Das als Ausführungsbeispiel gewählte Tisch- oder Geräteplattenanschlussfeld für Netzspannungsanschlüsse und/oder für Informationsanschlüsse umfasst einen Einbaurahmen 1, in dem ein Steckdoseneinsatz 2 angeordnet ist. Das Tisch- oder Geräteplattenanschlussfeld ist mit einem Abdeckrahmen 3 versehen, der in montiertem Zustand des Anschlussfeldes auf der Tisch- oder Geräteplatte bzw. dem Fußboden aufliegt. Der Abdeckrahmen 3 überdeckt in montiertem Zustand die für die Aufnahme des Anschlussfeldes in der Platte oder dem Fußboden vorgesehene Öffnung.

Der Einbaurahmen 1 ist aus Kunststoff hergestellt. Er besteht aus einem Rahmenteil 11 mit einer Wanne 12. Im Ausführungsbeispiel sind das Rahmenteil 11 und die Wanne 12 einteilig ausgeführt. Die Wanne 12 begrenzt den Einbaurahmen 1 auf der der Ansichtsseite abgewandten (unteren) Seite. Die Wanne 12 dient zum Schutz des Steckdoseneinsatzes 2 gegen das Eindringen bspw. von Gabelzinken oder Messerklingen, wenn sich diese in einer unter dem Tisch- oder Geräteplattenanschlussfeld angeordneten Schublade befinden. Beim Herausziehen der Schublade könnten diese andernfalls mit dem Steckdoseneinsatz in Kontakt kommen.

Die Wanne 12 ist mit Schlitzen 13 versehen. Die Schlitze 13 ermöglichen das Abfließen von in den Einbaurahmen 1 eintretenden Flüssigkeiten. Ebenso besteht bspw. beim Einbau des erfindungsgemäßen Anschlussfeldes in einer Küche die Möglichkeit, Krümel oder der gleichen aus dem Einbaurahmen 1 zu entfernen. An den seitlichen Enden der Wanne 12 sind von der Oberfläche der Wanne 12 nach oben gerichtete Stege 14 ausgebildet.

Das Rahmenteil 11 hat eine im Wesentlichen viereckige, im Ausführungsbeispiel rechteckige Form. In seinen vier Ecken ist das Rahmenteil 11 mit Löchern versehen, die Schrauben 15 aufnehmen können. Die Schrauben 15 dienen zur lösbaren Befestigung des Tisch- oder Geräteplattenanschlussfeldes an einer Platte oder einem Fußboden.

Das Rahmenteil 11 weist eine nach unten ausgerichtete, umlaufende Wand 16 auf. Die Wand 16 liegt in montiertem Zustand des Tisch- oder Geräteplattenanschlussfeldes an der für die Aufnahme des Anschlussfeldes in der Platte oder dem Fußboden vorgesehene Öffnung an.

Die Längsseiten des Rahmenteils 11 bilden bereichsweise den Übergang mit der Wanne 12. In diesem Bereich ist der Einbaurahmen 1 innen mit Rastnasen 17 zur Verbindung mit dem Abdeckrahmen 3 versehen. Zwischen den Rastnasen 17 ist jeweils eine federnd ausgebildete Führung 18 platziert.

Auf den Führungen 18 sind im Ausführungsbeispiel auf beiden Seiten der Wanne 12 jeweils Schieber 4 angeordnet. Die Schieber 4 weisen eine im Querschnitt U-förmige Basis 41 auf, die die Führungen 18 bereichsweise übergreifen. Auf der Basis 41 ist ein Kopfteil 42 angeordnet, welches einen trapezförmigen Querschnitt aufweist, wodurch spitze Enden 43 ausgebildet sind. Die Schieber 4 sind auf die Führungen 18 aufgeclipst und auf diesen vertikal verfahrbar. In Abwandlung des Ausführungsbeispiels kann auch lediglich ein Schieber 4 vorgesehen sein.

Der Steckdoseneinsatz 2 weist einen Anschlussbereich 21 auf, der mit einem Vorsprung 22 versehen ist, in dem Steckplätze 5 angeordnet sind. Bei den Steckplätzen 5 handelt es sich im Ausführungsbeispiel um eine Steckdose für Netzspannungsanschlüsse mit Schutzkontaktstecker und einen Steckplatz für Netzspannungsanschlüsse mit einem Euro-Stecker. Selbstverständlich ist eine andere Verteilung und Anzahl an Steckplätzen als die im Ausführungsbeispiel gezeigte möglich. Auch Steckplätze zum Anschluss von Informationssteckern bspw. in Form von USB (Universal Serial Bus) -Steckplätzen sind möglich.

Der Vorsprung 22 weist eine geringere Breite als der gesamte Steckdoseneinsatz 2 auf, wodurch an den Längsseiten des Vorsprungs 22 jeweils ein Rand 23 ausgebildet ist.

An seinen beiden Stirnseiten ist der Steckdoseneinsatz 2 jeweils mit einer Wange 24 versehen, welche den Anschlussbereich 21 bereichsweise übergreifen. Der nach unten gerichtete Bereich der Wangen 24 ist teilkreisförmig ausgeführt und folgt damit im Wesentlichen der Form der Wanne 12 des Einbaurahmens 1. In den Wangen 24 sind Schlitze 25 ausgebildet, die in montiertem Zustand mit den Stegen 14 des Einbaurahmens 1 korrespondieren und eine ebenso drehsichere wie axial gesicherte Anordnung des Steckdoseneinsatzes 2 im Einbaurahmen 1 ermöglichen.

An den Außenseiten der Wangen 24 sind Anbauteile 26 angeordnet, deren Kontur im Wesentlichen der Kontur des Steckbereichs 21 entspricht. Die Anbauteile 26 sind mit den Wangen 24 verschraubt. In mindestens einem Anbauteil 26 ist eine Kabelführung 27 ausgebildet, mittels derer die Steckplätze 21 an die jeweilige elektrische Installation anschließbar sind.

Der Anschlussbereich 21 ist in den Wangen 24 des Steckdoseneinsatzes 2 um mindestens 180° um seine Längsachse drehbar angeordnet. Hierzu sind auf den einander zugewandten (Innen-)Seiten der Wangen 24 - nicht dargestellte - Lager angeordnet. Durch die Drehachse des Steckbereichs 21 sind die Leitungen für den elektrischen Anschluss der Steckplätze geführt. Die Zugentlastung für die elektrischen Leitungen ist von den Lagern auf der Innenseite der Wangen 24 gebildet.

In Abwandlung des Ausführungsbeispiels besteht die Möglichkeit, andere Drehwinkel zu ermöglichen. So besteht beispielsweise die Möglichkeit, eine Drehung des Steckbereichs 21 um 360° zu realisieren. Die Lagerung des Steckbereichs 21 kann mit Rastpunkten versehen sein, um das Beibehalten eines gewünschten Winkels zu ermöglichen. Ein solcher kann neben dem Winkel von 180° bspw. auch bei einem Winkel von 135° vorgesehen sein, um eine dem Benutzer zugewandte, leicht schräg gestellte Einsteckposition zu realisieren.

Der Abdeckrahmen 3 weist auf seiner dem Fußboden oder der Tisch- oder Geräteplatte zugewandten Seite einen Hinterschnitt 31 auf. Der Hinterschnitt 31 ist zur Aufnahme einer - nicht dargestellten - Dichtung geeignet, so dass eine zusätzliche Sicherheit gegen das Eindringen von sich über die Platte oder den Fußboden ergießenden Flüssigkeiten geschaffen ist.

An seinen Längsseiten weist der Abdeckrahmen 3 nach unten gerichtete Rastnasen 32 auf. Die Rastnasen 32 des Abdeckrahmens 3 korrespondieren im montierten Zustand mit den Rastnasen 17 des Einbaurahmens 1, wodurch eine einfache und zugleich zuverlässige Rastverbindung zwischen Einbaurahmen 1 und Abdeckrahmen 3 geschaffen ist.

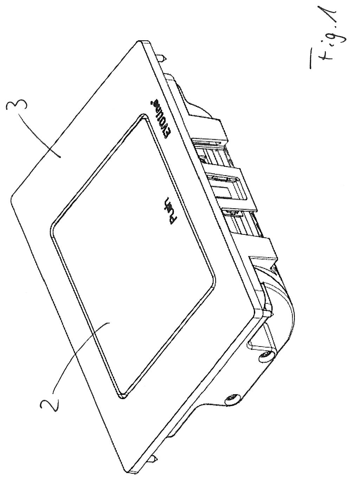

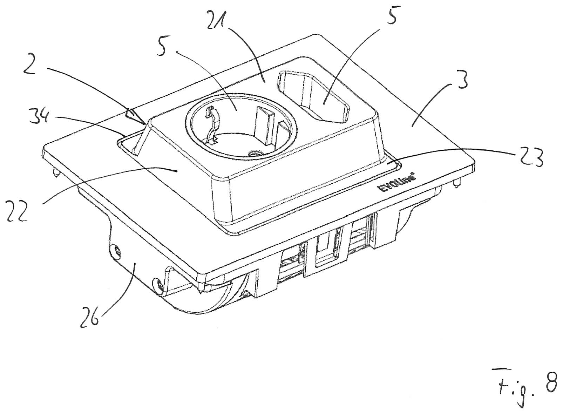

In seinem Zentrum ist im Abdeckrahmen 3 eine rechteckige Aussparung 34 ausgebildet, die in geschlossenem Zustand des Tisch- oder Geräteplattenanschlussfeldes von der Rückseite des Steckdoseneinsatzes 2 ausgefüllt ist (vgl. Figur 1). Im Funktionszustand ragt der Vorsprung 22 des Steckbereichs 21 durch die Aussparung 34 hervor (vgl. Figur 8).

Beim Einbau des erfindungsgemäßen Tisch- oder Geräteplattenanschlussfeldes wird dieses in bekannter Weise in einer in der Tisch- oder Geräteplatte bzw. dem Fußboden vorgesehene Öffnung verbaut. Hierzu wird zunächst der eine erste Baugruppe bildende Einbaurahmen 1 in die Öffnung in der Tisch- oder Geräteplatte bzw. dem Fußboden eingesetzt und mit den Schrauben 15 in der Tisch- oder Geräteplatte bzw. dem Fußboden befestigt.

Sodann werden der Steckdoseneinsatz 2 und der Abdeckrahmen 3 miteinander verbunden, indem der Steckdoseneinsatz 2 in den Einbaurahmen 3 eingesetzt wird. Steckdoseneinsatz 2 und Einbaurahmen 3 bilden eine zweite Baugruppe.

Die zweite Baugruppe aus Abdeckrahmen 3 und Steckdoseneinsatz 2 wird im Anschluss in den die erste Baugruppe bildenden Einbaurahmen 1 derart eingesetzt, dass die Rastnasen 32 des Abdeckrahmens 3 mit den Rastnasen 17 des Einbaurahmens 1 in Eingriff kommen. Gleichzeitig tauchen die Stege 14 des Einbaurahmens 1 in die Schlitze 25 des Steckdoseneinsatzes 2 ein, so dass der Steckdoseneinsatz 2 drehfest in dem Einbaurahmen 1 positioniert ist. In dieser montierten Position liegt der Abdeckrahmen 3 eben auf der Platte bzw. dem Fußboden auf. Das Tisch- oder Geräteplattenanschlussfeld ist nach Anschluss an die elektrische Installation bzw. Dateninstallation des jeweiligen Gebäudes betriebsbereit.

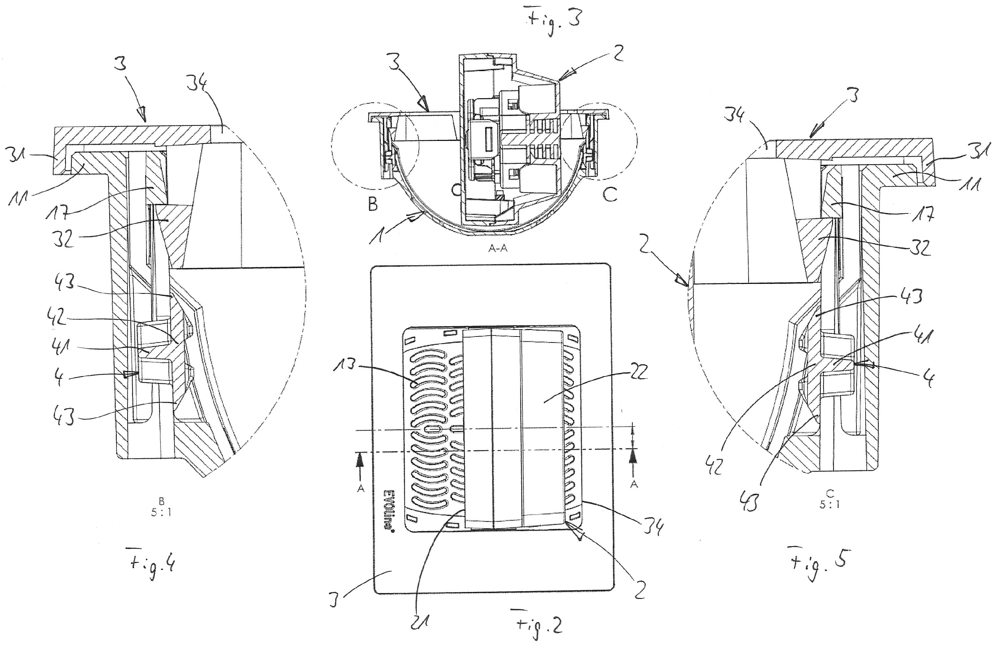

Zum Ausbau des Tisch- oder Geräteplattenanschlussfeldes wird der Steckdoseneinsatz 2 in die in Figur 2 dargestellte, halb geöffnete Position gedreht, in der der Anschlussbereich 21 um 90° um seine Längsachse gedreht ist. In dieser Position ist der Schieber 4 mit einem Werkzeug oder einem Finger erreichbar und kann nach oben in Richtung des Abdeckrahmens 3 bewegt werden. Dabei schiebt sich ein spitzes Ende 43 des Schiebers 4 unter die Rastnase 32 des Abdeckrahmens 3, wie dies in Figur 4 angedeutet ist. Dabei wird die Rastnase 32 nach innen gedrückt und gleichzeitig die federnde Führung 18 nach außen gedrückt. Bei Fortsetzen der Bewegung des Schiebers 4 werden die Rastnase 32 und die Führung 18 so weit gespreizt, dass die Rastverbindung zwischen ihnen aufgelöst wird, wodurch der Abdeckrahmen 3 mit dem Steckdoseneinsatz 2 freigegeben wird; der Abdeckrahmen 3 kann dann zusammen mit dem Steckdoseneinsatz 2 aus dem Einbaurahmen 1 entnommen werden.

## Patentansprüche

1. Tisch- oder Geräteplattenanschlussfeld für Netzspannungsanschlüsse und/oder Informationsanschlüsse, mit einem Einbaurahmen (1), in dem ein Steckdoseneinsatz (2) angeordnet ist und mit einem Abdeckrahmen (3) versehen ist, wobei der Steckdoseneinsatz (2) einen Anschlussbereich (21) mit Steckplätzen aufweist, der um seine Längsachse drehbar ist, **dadurch gekennzeichnet, dass** das Anschlussfeld aus zwei Baugruppen gebildet ist.

2. Anschlussfeld nach Anspruch 1, **dadurch gekennzeichnet dass** der Einbaurahmen (1) die erste Baugruppe bildet.

3. Anschlussfeld nach Anspruch 1 oder 2, **dadurch gekennzeichnet dass** der Steckdoseneinsatz (2) mit dem Abdeckrahmen (3) die zweite Baugruppe bildet.

4. Anschlussfeld nach einem der vorgenannten Ansprüche, **dadurch gekennzeichnet, dass** der Steckdoseneinsatz (2) mit dem Abdeckrahmen (3) über eine Rastverbindung verbunden ist.
